# EUROPEAN PATENT SPECIFICATION

(11) **EP 3 456 288 B1**
(45) Date of publication and mention of the grant of the patent: **04.11.2020**
(21) Application number: 18194877.9
(22) Date of filing: 17.09.2018
(51) Int. Cl.: A61C 19/00, A61J 1/16, B65D 1/36

(54) **WEARABLE DEVICE FOR THE SUPPLY OF MATERIALS AND/OR INSTRUMENTS FOR DENTAL RESTORATION**
TRAGBARES GERÄT FÜR DIE VERSORGUNG VON MATERIAL UND/ODER INSTRUMENTEN FÜR DENTALRESTAURATIOEN
DISPOSITIF PORTABLE POUR LA FOURNITURE DE MATÉRIAUX ET / OU D'INSTRUMENTS POUR LA RESTAURATION DENTAIRE

(30) Priority: 19.09.2017 IT 201700104655
(43) Date of publication of application: 20.03.2019
(73) Proprietor: Di Marzio, Francesco, 00188 Roma (IT)
(72) Inventor: Di Marzio, Francesco, 00188 Roma (IT)
(74) Representative: Frasson, Luca

(56) References cited:
- DE-U1- 20 314 104
- JP-A- H0 351 200
- US-A1- 2006 226 032
- US-A1- 2011 229 843
- US-A1- 2014 227 658

## Description

The present invention relates to a wearable device for the supply of materials and/or instruments for dental restoration. US2014/227658A1, US2006/226032A1 and US2011/229843A1 disclose wearable devices according to the preamble of claim 1.

Currently among dental restoration techniques, the use of so-called "composite" materials is known, based on resins adapted to be processed by the dentist to assume the configuration of the dental elements to be restored. Once applied, such "composite" materials are polymerized in the shape formed by the dentist, e.g. by means of light radiation, assuming compatible physical and mechanical characteristics with the dental function.

Based on the type of dental restoration to be performed, adhesive materials compatible with the aforesaid composite materials and adapted to guarantee stable adhesion of the composite material to the part of tooth still present are used. Such adhesive materials are often two-component or multi-component materials that polymerize when the related components are placed in mutual contact. Alternatively, or additionally, the polymerization can be initiated, or accelerated, through light radiation.

During a dental restoration operation, the dentist has to handle various instruments in succession which are necessary for processing and applying the composites and adhesives, such as spatulas, brushes, sponges, syringes for dispensing materials, and various instruments for processing the composites.

The dentist is generally assisted by an assistant who, based on the indications of the former, must promptly supply him/her with the tools and materials to be used for the dental restoration.

A significant difficulty often encountered in dental restoration operations regards the colour selection of the composite that is most adapted to the colour of the tooth to be restored and/or the adjacent teeth.

In fact, there are colour scales commonly used to classify the materials for dental restoration from the point of view of their colour. Such colour scales allow the most suitable set of colours to be roughly identified for the specific patient. However, the dental restoration operations still require the dentist to perform tests in many cases with the composite materials having different colour tones directly on the tooth that is restored in order to identify the most suitable composite, or combination of composites, in relation to the colour, for the specific restoration.

Also in this case it is the dentist's assistant who sees to providing the dentist with the individual composites having different colour tones, as well as brushes, spatulas, sponges or other instruments suitable for the application and processing of such composites.

It is clear that the dentist performing a dental restoration must operate quickly and precisely, in order to prevent the composites or adhesives from polymerizing before being appropriately applied to the area of the tooth to be restored. The precision and speed of the assistant supplying the dentist with instruments and materials as they are required are just as important for the correct performance of the dental restoration.

In fact, delays or hitches in the performance of the restoration operations or in the passing of materials or instruments can seriously invalidate the quality of the restoration itself.

The main task of the present invention consists of realizing a wearable device for the supply of materials and/or instruments for dental restoration that obviates the drawbacks and overcomes the limits of the prior art by allowing the dental restoration techniques currently adopted to be accelerated and made more precise.

In the context of this task, an object of the present invention is that of realizing a wearable device that allows the times for dental restoration operations to be reduced to a minimum.

Another object of the invention consists of the realization of a wearable device for the supply of materials and/or instruments for dental restoration that reduces to a minimum any mistakes, hitches and delays due to the activity of the assistant supplying materials and instruments to the dentist.

A further object of the invention consists of realizing a wearable device for the supply of materials and/or instruments for dental restoration that can provide the widest reliability and safety guarantees during use.

Yet another object of the invention consists of realizing a wearable device for the supply of materials and/or instruments for dental restoration that is both easy to realize and economically competitive compared with the prior art.

The task set forth above, as well as the mentioned objects and others that will appear more clearly below, are reached by a wearable device for the supply of materials and/or instruments for dental restoration as set forth in claim 1

Other characteristics are envisaged in the dependent claims.

Additional features and advantages will become more apparent from the description of a preferred, but non-exclusive, embodiment of a wearable device for the supply of materials and/or instruments for dental restoration, illustrated by way of non-limiting example with the aid of the appended drawings, in which:
Figure 1 is a perspective view of the wearable device, according to the invention;
Figure 2 is a plan view from above of the device of Figure 1, according to the invention;
Figure 3 is a sectional view of the device represented in Figure 2, according to the invention, performed according to the axis III-III;
Figure 4 is a perspective view of a first variant of the wearable device, according to the invention;
Figure 5 is a plan view from above of the device of Figure 4, according to the invention;
Figure 6 is a sectional view of the device represented in Figure 5, according to the invention, performed according to the axis VI-VI;
Figure 7 is a side elevation view of a second variant of the wearable device, according to the invention;
Figure 8 is a perspective view of a third variant of the wearable device, according to the invention;
Figure 9 is a side elevation view of the device of Figure 8, according to the invention;
Figure 10 is a perspective view of a fourth variant of the wearable device, according to the invention;
Figure 11 is a plan view from above of the device of Figure 10, according to the invention;
Figure 12 is a sectional view of the device represented in Figure 11, according to the invention, performed according to the axis XII-XII;
Figure 13 is a perspective view of a fifth variant of the wearable device, according to the invention;
Figure 14 is a plan view from above of the device of Figure 13, according to the invention;
Figure 15 is a side elevation view of the device of Figure 13, according to the invention;
Figure 16 is an exploded front view of the fifth variant of the wearable device, according to the invention;
Figure 17 is a side elevation view of the device of Figure 16, according to the invention;
Figure 18 is a perspective view of the wearable device, according to the invention, with a sponge attached;
Figure 19 is a perspective view of the wearable device, according to the invention, with a glass for protection from light radiation attached.

With reference to the mentioned figures, the wearable device for the supply of materials and/or instruments for dental restoration is indicated overall with reference number 1.

According to the invention, the wearable device 1 comprises a support body 3 in which a plurality of housings 5 are obtained, each housing 5 containing a different composite for dental restoration 8. An elastically deformable ring 9 adapted to fit the finger of an operator, such as a dentist, is associated with the support body 3.

As the wearable device 1 is intended to be worn by the same operator that performs the dental restoration and that needs to collect the different composites 8 contained in the housings 5, the wearable device 1 is advantageously free from elements that, at least on the operator's side, i.e. at least on the side of the ring 9, can prevent or hinder access to the composites 8 contained in the housings 5.

Advantageously, the ring 9, being deformable, is adapted to easily fit the finger of an operator, adapting to the dimensions thereof.

Advantageously, the ring 9 can be made of different rigid materials such as, for example, plastic or soft and/or elastic materials such as, for example, silicone materials or however materials having shape-memory properties.

According to the invention, the housings 5 comprise an internal coating, e.g. made of a ceramic type material, adapted to promote the storage and collection of the composite for dental restoration 8 by the operator.

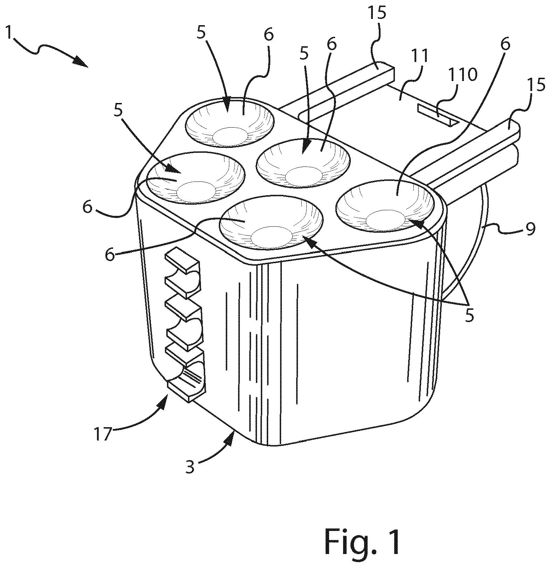

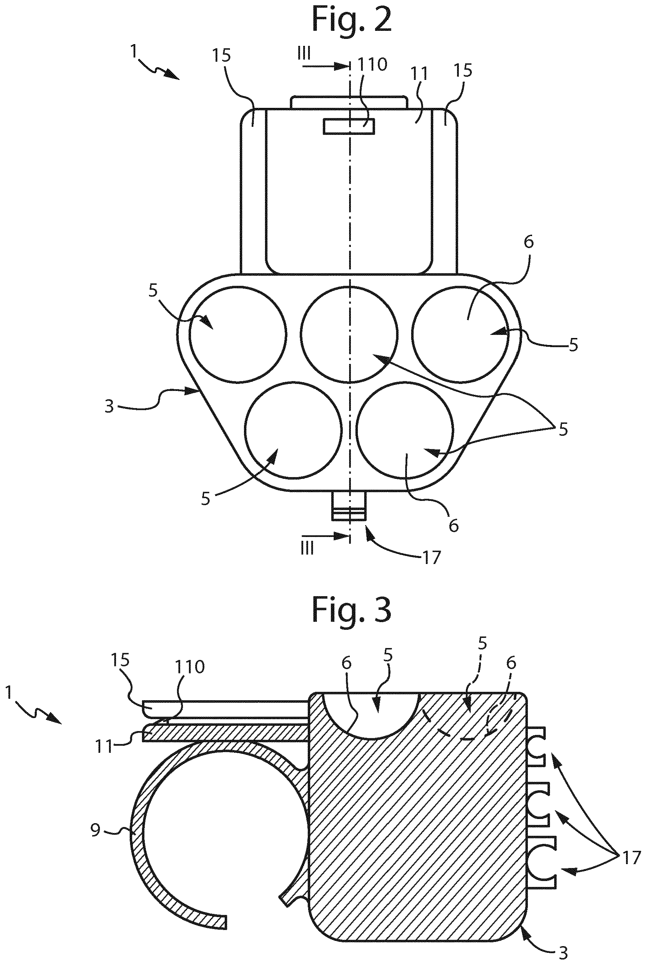

Figures 1 to 3 illustrate a wearable device 1 in which the containment housings 5 are constituted by cavities 6 obtained directly on the upper face of the support body 3.

Advantageously, as illustrated with reference to the first and the fourth variant of the wearable device 1, at least one of the housings 5 may comprise a movable bottom 50, which is axially movable inside the housing 5 for bringing the composite for dental restoration 8 contained in the housing 5 itself towards the outer surface.

Preferably, all the housings 5 present in the wearable device 1 have such a movable bottom 50.

In substance, as the composite for dental restoration 8 contained in a corresponding housing 5 is collected by the operator, it is possible to lift the movable bottom 50 to bring the composite 8 contained in the housing 5 back towards the mouth of the housing 5 itself.

Advantageously, the wearable device 1 comprises thrust means 51, 52 of the movable bottom 50, accessible from the outside of the support body 3, for moving the movable bottom 50 inside the housing 5.

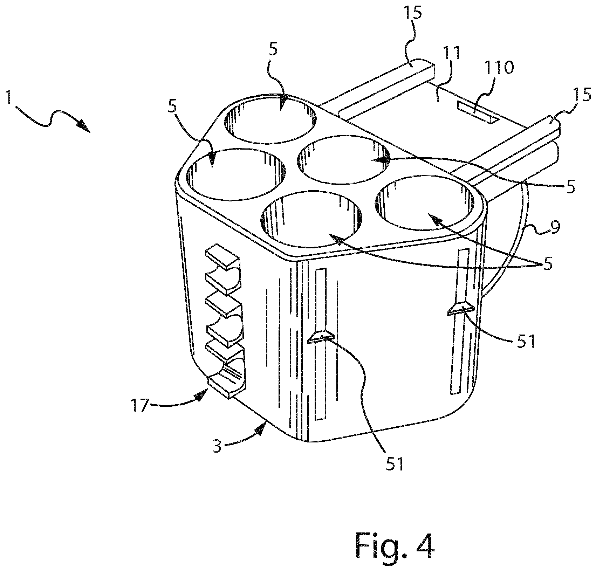

According to the first variant of the wearable device 1, illustrated in Figures 4, 5 and 6, the thrust means 51 are constituted by fins projecting laterally and externally from the support body 3 at and along the housings 5, which are associated with the corresponding movable bottoms 50.

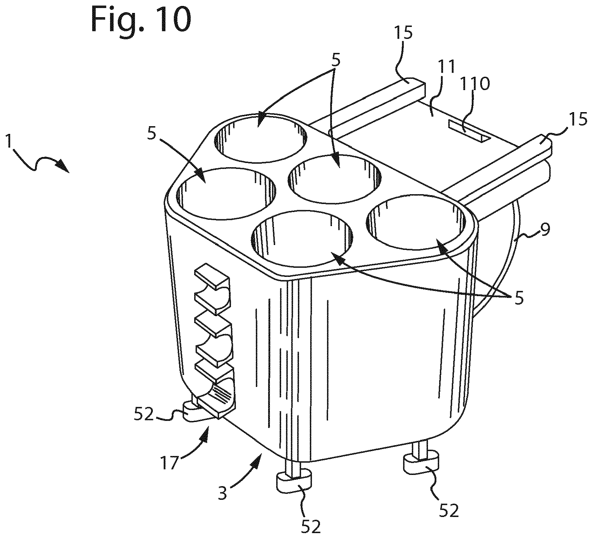

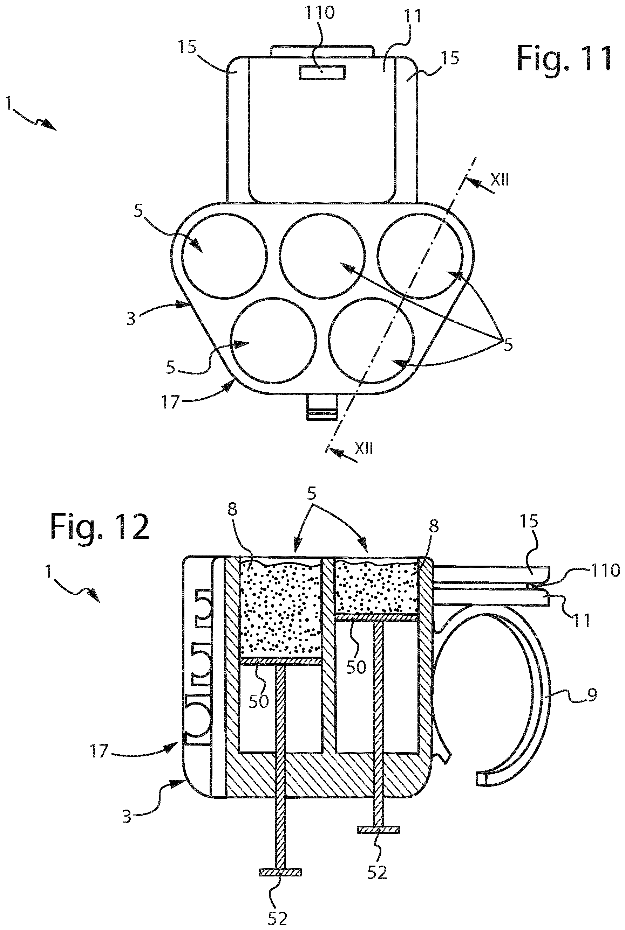

According to the fourth variant of the wearable device 1, illustrated in Figures 10, 11 and 12, the thrust means 52 are constituted by pistons projecting downwards from the support body 3 at the housings 5, which are associated with the corresponding movable bottoms 50.

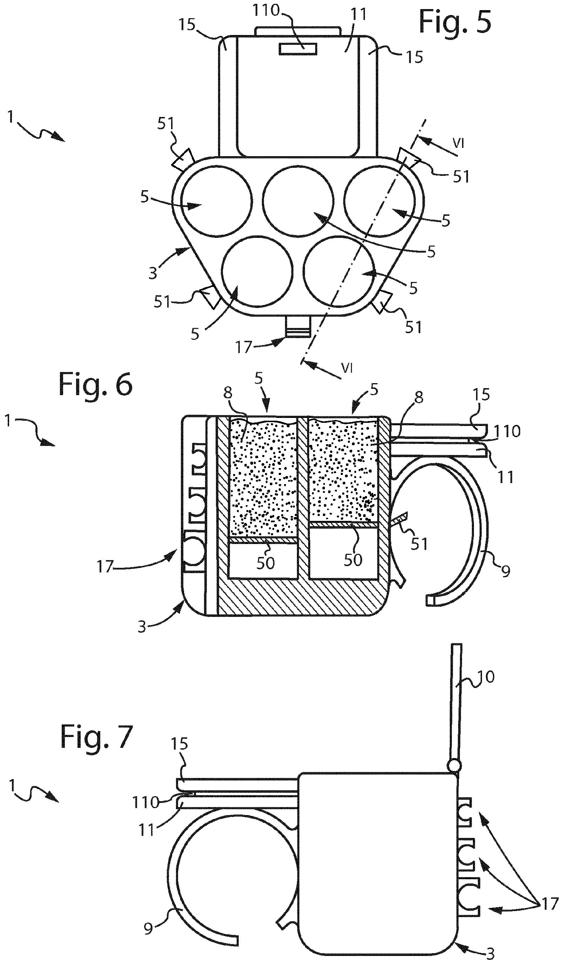

Advantageously, as illustrated in the second variant in Figure 7, the wearable device 1 comprises a door 10 being movable between a closed position in which it closes the housings 5 from above and an open position in which it allows access to the housings 5 by the operator.

Such door 10 is hinged to the support body 3 at the part of the support body 3 opposite where the ring 9 is arranged, so as not to be an impediment to the operator wearing the device 1 during use thereof.

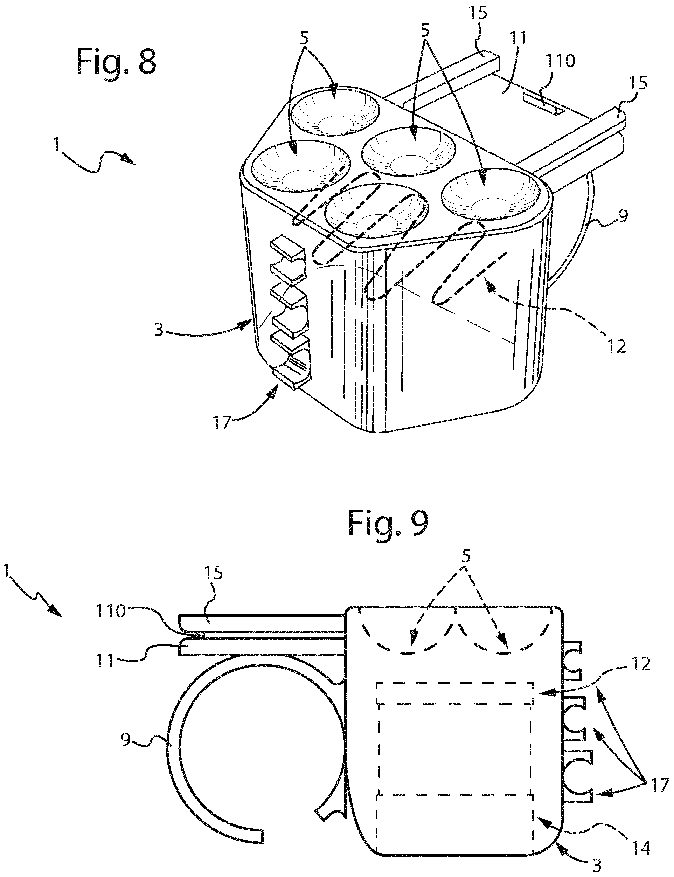

Advantageously, as illustrated in the variant presented in Figures 8 and 9, the wearable device 1 comprises heating means 12 adapted to heat the composite for dental restoration 8 contained in the housings 5.

In fact, the processing of the composite for dental restoration 8 is easier if such composite is kept heated to a certain temperature.

The heating means 12 may be electric heating means, e.g. of the electrical resistor type and may be powered by electric power means 14 e.g. of the battery type.

As illustrated in Figures 8 and 9, the heating means 12 and the electric power means 14 may be contained inside the support body 3.

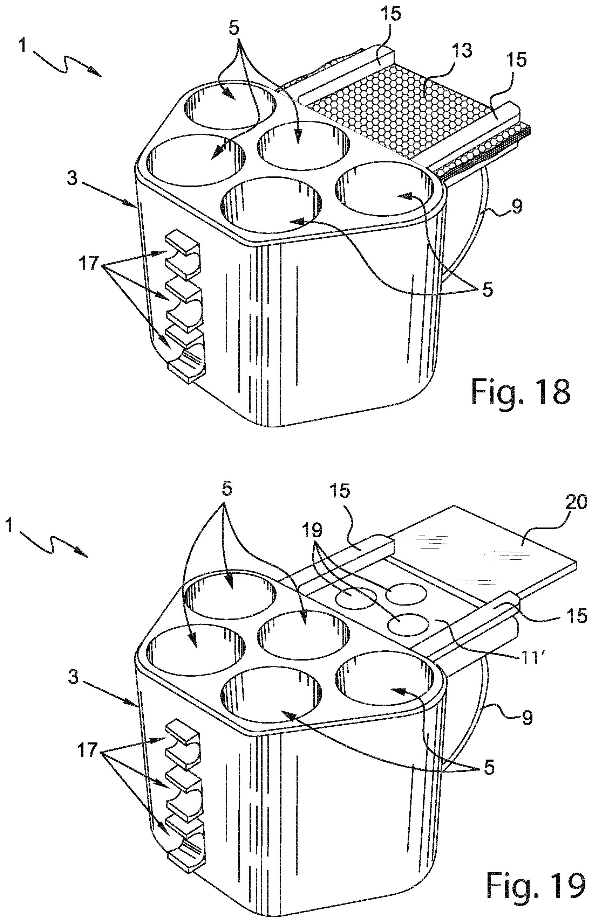

The wearable device 1 may advantageously comprise a support tray 11 to which a sponge 13 can be fixed, as illustrated in particular in Figure 18.

Advantageously the support tray 11 may comprise a retaining tooth 110 for the sponge 13.

The sponge 13 is useful for cleaning the spatulas and other instruments. Thanks to the presence of the sponge 13, such cleaning can be performed directly by the dentist, without requiring the assistant's intervention.

The wearable device 1 can also comprise, as illustrated in Figure 19, a support tray 11' in which a plurality of seats 19 are obtained, adapted to contain respectively the components of a dental adhesive.

Advantageously such seats 19 are covered by a removable glass 20 for protection from light radiation.

Preferably three seats 19 are provided as the dental adhesives may be of the one-component type, i.e. polymerizable for example through light radiation in the visible light spectrum, or in the UV light spectrum, in which case one seat 19 would be sufficient, or they may be of the two-component or three-component type, i.e. polymerizable when the two or three components of the dental adhesive are placed in mutual contact with each other.

The wearable device 1 advantageously comprises a pair of elastic holding elements 15 associated with the support tray 11, 11', for holding said sponge 13 and/or said removable glass 20 for protection from light radiation.

Advantageously the wearable device 1 comprises a plurality of elastically deformable hooking means 17 adapted to hold a plurality of brushes and/or spatulas for the application of the dental composites and/or the components of the dental adhesive.

Such hooking means 17 can have different sizes and configurations from each other, in order to hold brushes and/or spatulas of different sizes.

Such hooking means 17 may be defined by a pair of C-shaped elastic arms.

Advantageously each housing 5 contains a composite for dental restoration 8 of a different colour.

Advantageously the housings 5 are dimensioned so as to contain a quantity of composite adapted for an individual dental restoration operation.

Preferably the wearable device 1 is of the disposable type.

The wearable device 1 is advantageously contained in a sterile package and has its own housings 5 already filled with a set of different composites for dental restoration 8, e.g. of different colours.

In substance the wearable device 1 is supplied by the manufacturer already provided with a set of composites for dental restoration 8, of different colours, in determined quantities, contained in the housings 5 and supplied already ready for the final operator, i.e. the dentist, to use.

The housings 5 may, as required, be subsequently filled with new composite material 8, e.g. prior to a new dental restoration operation, or if all the composite in one or more of the housings 5 has been used.

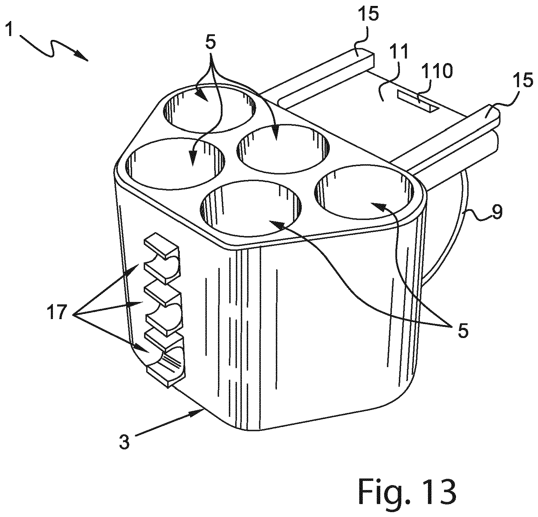

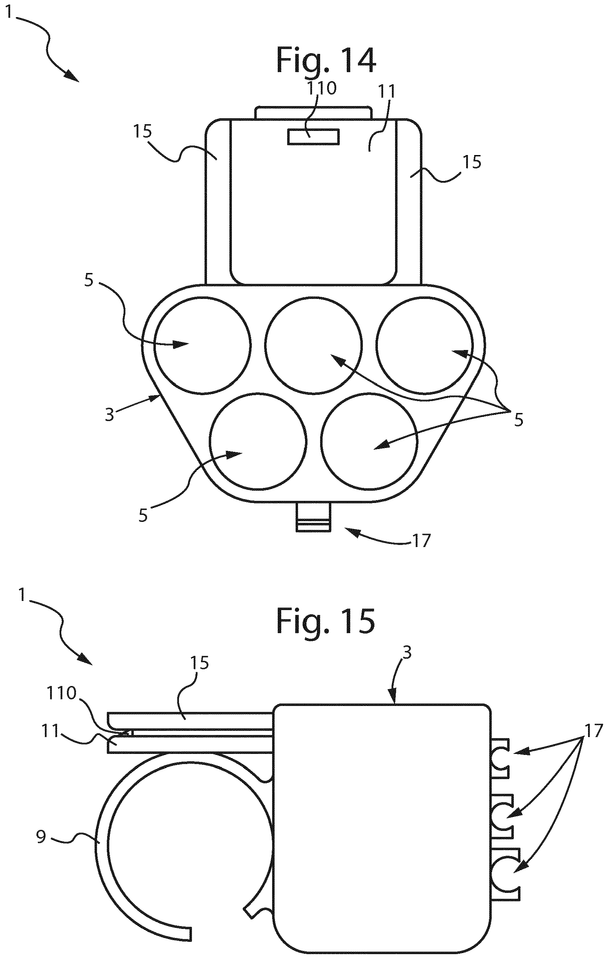

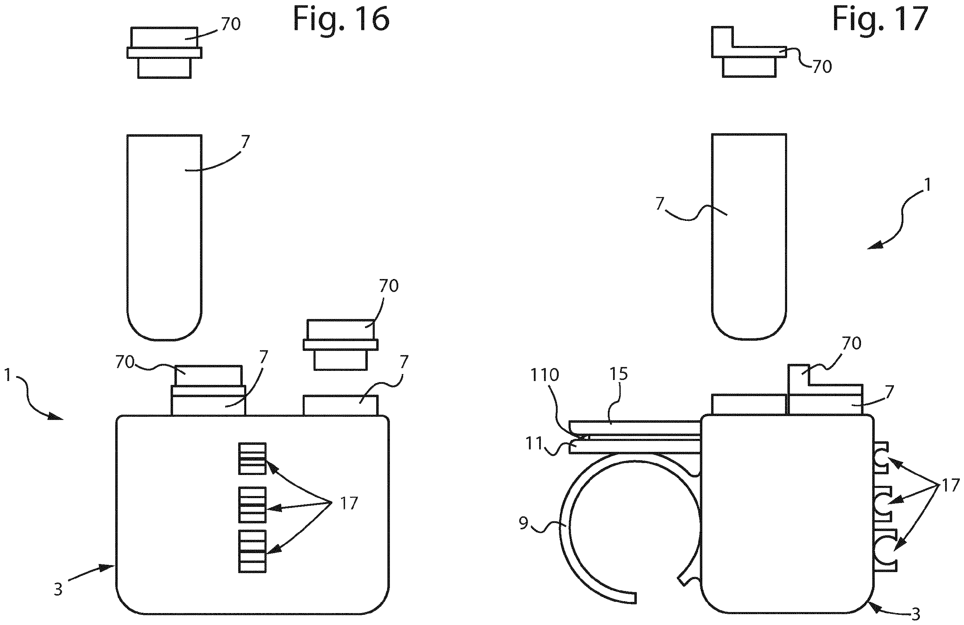

According to the fifth variant of the wearable device 1, illustrated in Figures 13 to 17, the wearable device 1 comprises a plurality of containers 7 removably housed in the housings 5, where each container 7 contains a different composite for dental restoration. For example, the different containers 7 can each contain a different coloured composite inside them.

Advantageously, the containers 7 comprise a cap 70.

The containers 7 advantageously have a circular section and/or a capsule configuration. In fact, the containers 7 are advantageously conformed so as to be inserted in relevant stoves provided to maintain the composite contained inside the containers 7 themselves at a temperature such as to keep it in a viscous state that can be processed plastically by the dentist.

Advantageously the containers 7 are housed so as to contain a quantity of composite adapted for the individual dental restoration operation.

The containers 7 may be of the disposable type.

Advantageously the containers 7 may be supplied to the dentist already filled with a certain quantity of composite.

For example, the containers 7 may be pre-filled with certain quantity of composites by the company that then supplies it to the end user, i.e. the dentist.

Alternatively, the containers 7 may be filled as required by the dentist e.g. prior to the dental restoration operation.

The support body 3 may be advantageously washed, sterilized and reused with disposable containers 7, or with containers 7 that have been washed and sterilized.

Advantageously, the containers 7 may each comprise a piston which is movable inside the containment volume of the composite and along the direction of longitudinal extension of the container 7, which is adapted to push the composite for dental restoration contained in the container 7 towards the mouth of the container 7 itself. In this way the composite is always available for the dentist at the mouth of the container 7.

The housings 5 for the containers 7 may have a substantially cylindrical shape, and may have different diameters according to the diameter of the containers 7 in which they are housed.

Preferably the containers 7 are held stably inside the housings 5 themselves, e.g. by mechanical interference or thanks to the presence of hooking means such as bayonets or screwing systems.

Alternatively, or additionally, magnetic coupling means may be provided between the containers 7 and the related seats 5, able to stably hold the containers 7 inside the housings 5.

The present invention also relates to a wearable device 1 for the supply of materials and/or instruments for dental restoration comprising a support body 3 in which a plurality of housings 5 are obtained housing a plurality of containers 8 each containing a composite for dental restoration, an elastically deformable ring 9, adapted to fit the finger of an operator, being associated with said support body 3.

An example of use of the wearable device 1 is described below.

The wearable device 1 may be supplied in a sterile package already provided with a set of pre-selected composites 8, e.g. according to a range of colours.

The instruments that will be used for the application and processing of the composites on the tooth to be restored, such as brushes and spatulas, may already be present in the package, fixed to the hooking means 17 of the wearable device 1, or may be fixed to such hooking means 17 by the operator, prior to the operation.

In the same way the sponge 13 may be inserted on the support tray 11, held by the elastic holding elements 15.

The dentist therefore wears the wearable device 1 on the index finger of the hand that he/she does not use for the application and processing of composites.

In this way the composites with the selected colour tones and the instruments for the application and processing thereof are directly available to the dentist and the continuous intervention of the assistant is not necessary.

The dentist can freely collect a desired composite with the spatula, position it on the tooth, handle it and then clean the spatula on the sponge 13 and collect a different composite, or collect one of the brushes held by the hooking means 17 having the most suitable configuration or size for the operation to be performed.

Therefore the dental restoration operation is as a whole quicker to perform and less subject to mistakes due to the manual passing of materials and/or instruments.

In the case in which the use of a dental adhesive is also envisaged prior to the application of the composite, the dentist or the assistant envisages arranging in the seats 19 present on the tray 11' the components of the dental adhesive, possibly protecting them temporarily from light with the removable glass 20.

Also in this case the components of the dental adhesive may be mixed and/or collected directly by the dentist, without the intervention of the assistant, making use of the most suitable brushes, also directly available to the dentist as they are fixed to the hooking means 17 of the wearable device 1.

As the composite 8 is consumed, the dentist can intervene to lift the movable bottom 50 of the housings 5 and bring the composite 8 back towards the surface.

Alternatively, in the event in which the wearable device 1 comprises a plurality of containers 7 of composite, the dentist can select the set of colours for the composites to be used for the dental restoration, by choosing a certain number of containers 7 and then inserting them 7 in the housings 5 of the device 1.

In this case the containers 7 can be of the disposable type, while the support body 3, with the related ring 9 and the support tray 11, 11' is washable, sterilisable and reusable.

It has in practice been observed how the wearable device for the supply of materials and/or instruments for dental restoration, according to the present invention, fulfils the task as well as the predefined aims as it allows the performance of dental restoration operations to be made quicker and more precise.

Another advantage of the wearable device, according to the invention, consists of the fact that hitches, delays and mistakes due to the intervention of the dentist's assistant are reduced.

A further advantage of the wearable device, according to the invention, consists of the fact that it allows the dentist to have all the materials and necessary instruments available for performing the dental restoration, at a shorter distance from the operating zone.

The wearable device for the supply of materials and/or instruments for dental restoration as conceived herein is susceptible to many modifications and variations within the scope of the appended claims. In practice, the materials used, as well as their dimensions, can be of any type according to the technical requirements.

In practice, the materials used, provided they are compatible with the specific use, as well as the dimensions and the contingent shapes, can be any according to the requirements.

## Claims

1. Wearable device (1) for the supply of materials and/or instruments for dental restoration, comprising a support body (3) in which a plurality of housings (5) are obtained, where each of said housings (5) contains a different composite for dental restoration (8), an elastically deformable ring (9), adapted to fit the finger of an operator, being associated with said support body (3) **characterized in that** said housings (5) comprise an internal coating adapted to promote the storage and collection of said composite for dental restoration (8) by an operator.

2. Wearable device (1) according to claim 1, **characterized in that** at least one of said housings (5) comprises a movable bottom (50), said movable bottom (50) being axially movable inside said housing (5) for bringing said composite for dental restoration (8) contained in said housing (5) towards the outer surface.

3. Wearable device (1), according to claim 2, **characterized in that** it comprises thrust means (51, 52) of said movable bottom (50), accessible from the outside of said support body (3), for moving said movable bottom (50) inside said housing (5).

4. Wearable device (1), according to one or more of the preceding claims, **characterized in that** it comprises a door (10) being movable between a closed position in which said door (10) closes said housings (5) from above and an open position in which said door (10) allows access to said containment housings (5), said door (10) being hinged to said support body (3) at the part of said support body (3) opposite where said ring (9) is arranged.

5. Wearable device (1) according to one or more of the preceding claims, **characterized in that** it comprises a heating means (12) adapted to heat said composite for dental restoration (8) contained in said seats (5).

6. Wearable device (1), according to one or more of the preceding claims, **characterized in that** it comprises a support tray (11) to which a sponge (13) can be fixed.

7. Wearable device (1), according to claim 1, **characterized in that** it comprises a support tray (11') in which a plurality of seats (19) are obtained, adapted to contain respectively the components of a dental adhesive.

8. Wearable device (1), according to one or more of the preceding claims, **characterized in that** it comprises a support tray (11') in which a plurality of seats (19) are obtained, adapted to contain respectively the components of a dental adhesive, said seats (19) preferably being covered by a removable glass (20) for protection from light radiation.

9. Wearable device (1), according to one or more of the preceding claims, **characterized in that** it comprises a pair of elastic holding elements (15) associated with said support tray (11, 11'), for holding said sponge (13) and/or said removable glass (20) for protection from light radiation.

10. Wearable device (1), according to one or more of the preceding claims, **characterized in that** it comprises a plurality of elastically deformable hooking means (17) adapted to hold a plurality of brushes and/or spatulas for the application of said dental composites and/or of said components of said dental adhesive.

11. Wearable device (1), according to one or more of the preceding claims, **characterized in that** said housings (5) house a plurality of containers (7) each containing a different composite for dental restoration.

12. Wearable device (1), according to claim 11, **characterized in that** said containers (7) each comprise a piston which is movable inside the containment volume and along the direction of longitudinal extension of said container (7), for pushing said composite for dental restoration contained in said container (7) towards the mouth of said container (7).

13. Wearable device (1) according to claim 12, **characterized in that** said containers (7) comprise a closure cap (70).

## Patentansprüche

1. Tragbares Gerät (1) für die Versorgung von Material und/oder Instrumenten für Dentalrestaurationen, umfassend einen Trägerkörper (3), in dem eine Mehrzahl von Aufnahmen (5) erhalten ist, wobei jede Aufnahme (5) ein anderes Komposit für Dentalrestaurationen (8) enthält, einen elastisch verformbaren Ring (9), der dazu geeignet ist, auf den Finger eines Bedieners zu passen, der mit dem Trägerkörper (3) verbunden ist, **dadurch gekennzeichnet, dass** die Aufnahmen (5) eine Innenbeschichtung umfassen, die dazu geeignet ist, die Lagerung und Sammlung des Komposits für Dentalrestaurationen (8) seitens eines Bedieners zu fördern.

2. Tragbares Gerät (1) nach Anspruch 1, **dadurch gekennzeichnet, dass** mindestens eine der Aufnahmen (5) einen beweglichen Boden (50) umfasst, wobei der bewegliche Boden (50) im Inneren der Aufnahme (5) axial beweglich ist, um das in der Aufnahme (5) enthaltene Komposit für Dentalrestaurationen (8) zur äußeren Oberfläche hin zu bringen.

3. Tragbares Gerät (1) nach Anspruch 2, **dadurch gekennzeichnet, dass** es Druckmittel (51, 52) für den beweglichen Boden (50) umfasst, die von außerhalb des Trägerkörpers (3) zugänglich sind, um den beweglichen Boden (50) ins Innere der Aufnahme (5) zu bewegen.

4. Tragbares Gerät (1) nach einem oder mehreren der vorstehenden Ansprüche, **dadurch gekennzeichnet, dass** es eine Tür (10) umfasst, die zwischen einer geschlossenen Position, in der die Tür (10) die Aufnahmen (5) von oben verschließt, und einer offenen Position, in der die Tür (10) Zugang zu den Aufnahmen (5) gewährt, beweglich ist, wobei die Tür (10) am Trägerkörper (3) angelenkt ist, gegenüberliegend dem Teil des Trägerkörpers (3), an dem der Ring (9) angeordnet ist.

5. Tragbares Gerät (1) nach einem oder mehreren der vorstehenden Ansprüche, **dadurch gekennzeichnet, dass** es Heizmittel (12) umfasst, die dazu geeignet sind, das in den Aufnahmen (5) enthaltene Komposit für Dentalrestaurationen (8) zu erwärmen.

6. Tragbares Gerät (1) nach einem oder mehreren der vorstehenden Ansprüche, **dadurch gekennzeichnet, dass** es eine Trägerschale (11) umfasst, an der ein Schwamm (13) befestigt werden kann.

7. Tragbares Gerät (1) nach Anspruch 1, **dadurch gekennzeichnet, dass** es eine Trägerschale (11') umfasst, auf der eine Mehrzahl von Vertiefungen (19) erhalten sind, die dazu geeignet sind, jeweils die Komponenten eines Dentalklebstoffes aufzunehmen.

8. Tragbares Gerät (1) nach einem oder mehreren der vorstehenden Ansprüche, **dadurch gekennzeichnet, dass** es eine Trägerschale (11') umfasst, auf der eine Mehrzahl von Vertiefungen (19) erhalten ist, die geeignet sind, jeweils die Komponenten eines Dentalklebstoffes aufzunehmen, wobei die Vertiefungen (19) vorzugsweise mit einem abnehmbaren Glas (20) zum Schutz vor Lichteinstrahlung abgedeckt sind.

9. Tragbares Gerät (1) nach einem oder mehreren der vorstehenden Ansprüche, **dadurch gekennzeichnet, dass** es ein Paar von elastischen Halteelementen (15) umfasst, die mit der Trägerschale (11, 11') verbunden sind, um den Schwamm (13) und/oder das abnehmbare Glas (20) zum Schutz vor Lichteinstrahlung zu halten.

10. Tragbares Gerät (1) nach einem oder mehreren der vorstehenden Ansprüche, **dadurch gekennzeichnet, dass** es eine Mehrzahl von elastisch verformbaren Hakenmitteln (17) umfasst, die dazu geeignet sind, eine Mehrzahl von Pinseln und/oder Spateln zum Applizieren des Dentalkomposits und/oder des Dentalklebstoffes zu halten.

11. Tragbares Gerät (1) nach einem oder mehreren der vorstehenden Ansprüche, **dadurch gekennzeichnet, dass** die Aufnahmen (5) eine Mehrzahl von Behältern (7) aufnehmen, die jeweils ein unterschiedliches Komposit für Dentalrestaurationen enthalten.

12. Tragbares Gerät (1) nach Anspruch 11, **dadurch gekennzeichnet, dass** die Behälter (7) jeweils einen Kolben umfassen, der im Inneren des Aufnahmeraumes und entlang der Richtung der Längserstreckung des Behälters (7) beweglich ist, um das in dem Behälter (7) enthaltene Komposit für Dentalrestaurationen zur Öffnung des Behälters (7) hin zu drücken.

13. Vorrichtung (1) nach Anspruch 12, **dadurch gekennzeichnet, dass** die Behälter (7) einen Verschlussdeckel (70) umfassen.

## Revendications

1. Dispositif portable (1) pour la fourniture de matériaux et/ou d'instruments pour la restauration dentaire, comprenant un corps de soutien (3) dans lequel une pluralité de logements (5) sont obtenus, où chacun desdits logements (5) contient un composite différent pour la restauration dentaire (8), un anneau (9) élastiquement déformable, adapté pour s'ajuster au doigt d'un opérateur, étant associé audit corps de soutien (3) **caractérisé en ce que** lesdits logements (5) comprennent un revêtement intérieur adapté pour faciliter le stockage et la collection dudit composite pour la restauration dentaire (8) par un opérateur.

2. Dispositif portable (1) selon la revendication 1, **caractérisé en ce qu'**au moins l'un desdits logements (5) comprend un fond mobile (50), ledit fond mobile (50) étant mobile en direction axiale à l'intérieur dudit logement (5) pour amener ledit composite pour la restauration dentaire (8) contenu dans ledit logement (5) vers la surface extérieure.

3. Dispositif portable (1), selon la revendication 2, **caractérisé en ce qu'**il comprend des moyens de poussée (51, 52) dudit fond mobile (50), accessibles de l'extérieure dudit corps de soutien (3), pour déplacer ledit fond mobile (50) à l'intérieur dudit logement (5).

4. Dispositif portable (1), selon l'une ou plusieurs des revendications précédentes, **caractérisé en ce qu'**il comprend une porte (10) étant mobile entre une position fermée dans laquelle ladite porte (10) ferme ledit logement (5) par le haut et une position ouverte dans laquelle ladite porte (10) permet l'accès auxdits logements de confinement (5), ladite porte (10) étant articulée sur ledit corps de soutien (3) dans la partie dudit corps de soutien (3) opposée à l'endroit où ledit anneau (9) est disposé.

5. Dispositif portable (1) selon l'une ou plusieurs des revendications précédentes, **caractérisé en ce qu'**il comprend un moyen de chauffage (12) adapté pour chauffer ledit composite pour la restauration dentaire (8) contenu dans lesdits sièges (5).

6. Dispositif portable (1), selon l'une ou plusieurs des revendications précédentes, **caractérisé en ce qu'**il comprend un plateau de support (11) auquel une éponge (13) peut être fixée.

7. Dispositif portable (1), selon la revendication 1, **caractérisé en ce qu'**il comprend un plateau de support (11') dans lequel une pluralité de sièges (19) sont obtenus, adaptés pour contenir respectivement les composants d'un adhésif dentaire.

8. Dispositif portable (1), selon l'une ou plusieurs des revendications précédentes, **caractérisé en ce qu'**il comprend un plateau de support (11') dans lequel une pluralité de sièges (19) sont obtenus, adaptés pour contenir respectivement les composants d'un adhésif dentaire, lesdits sièges (19) étant de préférence recouverts d'un verre amovible (20) pour la protection contre les rayonnements lumineux.

9. Dispositif portable (1), selon l'une ou plusieurs des revendications précédentes, **caractérisé en ce qu'**il comprend une paire d'éléments de maintien (15) élastiques associés avec ledit plateau de support (11, 11') pour le maintien de ladite éponge (13) et/ou dudit verre amovible (20) pour la protection contre les rayonnements lumineux.

10. Dispositif portable (1), selon l'une ou plusieurs des revendications précédentes, **caractérisé en ce qu'**il comprend une pluralité de moyens d'accrochage (17) élastiquement déformables adaptés pour maintenir une pluralité de brosses et/ou spatules pour l'application desdits composites dentaires et/ou desdits composants dudit adhésif dentaire.

11. Dispositif portable (1), selon l'une ou plusieurs des revendications précédentes, **caractérisé en ce que** lesdits logements (5) logent une pluralité de récipients (7) contenant chacun un composite différent pour la restauration dentaire.

12. Dispositif portable (1), selon la revendication 11, **caractérisé en ce que** lesdits récipients (7) contiennent chacun un piston qui est mobile à l'intérieur du volume de confinement et le long de la direction d'extension longitudinale dudit récipient (7), pour pousser ledit composite pour la restauration dentaire contenu dans ledit récipient (7) vers l'embouchure dudit récipient (7).

13. Dispositif portable (1) selon la revendication 12, **caractérisé en ce que** ledit récipient (7) comprend un bouchon de fermeture (70).
